Europäisches Patentamt

European Patent Office

Office européen des brevets

(19)

(11) Veröffentlichungsnummer: **0 201 654**
**A1**

(12) **EUROPÄISCHE PATENTANMELDUNG**

(21) Anmeldenummer: 85830116.1

(22) Anmeldetag: 17.05.85

(51) Int. Cl.⁴: **F 16 B 15/02**

(43) Veröffentlichungstag der Anmeldung:
20.11.86 Patentblatt 86/47

(84) Benannte Vertragsstaaten:
AT BE CH DE FR GB IT LI LU NL SE

(71) Anmelder: **Salvatore, Priore**
**via Mario Osti 11**
**Monte San Pietro (Bologna)(IT)**

(72) Erfinder: **Salvatore, Priore**
**via Mario Osti 11**
**Monte San Pietro (Bologna)(IT)**

(74) Vertreter: **Sassatelli, Franco**
**INIP via Ruggi 5**
**I-40137 Bologna(IT)**

(54) **Holzzimmereinagel.**

(57) Der Nagelstab weist neben dem Kopf (2) eine kleinere Krone (3) auf seiner Achse (1) auf, deren Durchmesser kleiner als der des Nagelkopfes (2) ist und die beim Eindringen des Nagels als Haltegrundlage wirkt. Unter diesen Umständen ragt der Nagelkopf (2) auf der Eindringenoberfläche heraus und die dazwischenliegende Nagelstabslänge wirkt als Abstandsstück. Das Herausziehen des Nagels erfolgt durch den Einsatz eines üblichen gabelförmigen Werkzeuges, so daß Arbeitssicherheit sowie Geschwindigkeit gewährleistet werden. Da diese kleine Haltegrundlage nur wenig herausragt, kann der Nagel auch vollständig bis zum Kopf (2) eingeschlagen werden, so daß bei besonderen Gefügegrundlagen keine herausragenden Teile vorkommen. Obiger Gegenstand kann besonders bei Zimmereiarbeiten Verwendung finden, bei welchen zum Rückgewinnen des Holzmaterials die Nägel von den Brettern herausgezogen werden müssen.

FIG.2

EP 0 201 654 A1

- 1 -

"Holzzimmereinagel".

Die Erfindung bezieht sich auf einen Nagel, der die Herausziehphase erleichtert und grundsaetzlich gestattet, das Werkzeug hindernislos in die Ausziehlage zu bringen, um somit die Anstrengung auf die Hebelbetaetigung zu beschraenken.

Das Mittel kann zum vorlaeufigen Feststellen von Holzteilen zueinander verwendet werden, wie sie bei besonseren Arbeiten von Vorbefestigung mittels Stiften notwendig sind, und kann besonders bei Holzzimmereiarbeiten Verwendung finden. Auf diesem Gebiet gestattet das zentrierte Gelangen des gabelfoermigen Ausziehers auf den Nagelstift die Beschaedigung des Rueckgewinnmaterials zu beschraenken und beschleunigt die Ausreustarbeit.

Die gegenwaertig verwendeten Nagel- entweder fuer Zimmerei oder andere Zwecke - sind mit einem zugespitzten Stift versehen, den man bis zum Kopf eindringen laesst; letzterer wirkt als Laufbegrenzer und haelt bei den Gefuegen das Brett auf dem anderen Verbindungsbrett fest.

Der Nachteil dieses Verfahren besteht darin, dass die Kopfkrone der Wand des Holzteiles anliegt, so dass zum Herausziehen des Nagels zuerst dessen Kopf freigelegt werden muss, um den gabelfoermigen Teil des Hammers in die Arbeitslage zu versetzen. Das braucht eine gewisse Zeit sowie eine erhebliche und nicht zupassende Anstrengung, was dazu durch das Zwangeinsetzen des Hammergabelteils das Holz beschaedigt.

Die Erfundene Vorrichtung gestattet, obigen Nachteilen vorzubeugen, naemlich durch Verwendung eines Sondernagels, der das Werkzeug in die Herausstellung ohne Anstrengung zu bringen gestattet. Es wird somit moeglich, die Gefuegen abzuruesten, indem man die Nagel mit Zentrierwirkung durch die blosse Herausziehanstrengung arbeiten. Das wird dadurch moeglich, weil der Nagel an der kleinen Eindringhaltegrundlage eienen Einstellsitz fuer den gabelfoermigen Herausziehteil vor sieht, wodurch das Anlehnen zur Zentrierwirkung auf der mittleren Laenge des Stabes zwischen dieser Grundlage und den Kopf ermoeglicht wird. Die Haltegrundlage ist mit einer leicht herausragenden Krone versehen, deren Durchmesser kleiner als der des Nagelkopfes ist: gemaess einer weiteren Ausfuehrungsform der Erfindung gestattet das, den Nagel durch eien groessere Hiebstaerke und eienen darauffolgenden Anstoss vollkommen bis zum Kopf eindringen zu lassen. Diese Ausfuehrung gestattet, bei besonderen Lagen wie bei Gaengen, Gelaendern usw. dem Herausragen von Metallteilen vorzubeugen, die Personen verletzten koennten.

Eine Ausfuehrungsform ist bloss als Beispiel und daher

0201654

keinesfalls in einer beschraenkenden Weise durch die Zeichnungen der Tafel 1 illustriert. Darauf bezugnehmend ist Bild 1 die Seitenansicht des Nagels; man kann den zugespitzten Stift bemerken, der neben dem Kopf die scheibenfoermige Grundplatte traegt. Im Bild 2 ist die perspektivische Ansicht des vorausgehenden Bildes bemerkbar. Das Bild 3 zeigt die Schnittansicht des auf einem Holzbrett angebrachten Nagels. In dieser Lage kann man den Einstellsitz zum Anlegen des Hammergabels bemerken. Im Bild 4 kann der im Holzbrett bis zum Kopf eingefuehrte Nagel beobachtet werden. Das Bild 5 zeigt das Herausziehverfahren gemaess der Erfindung: nachdem das Werkzeug in die richtige Lage gelegt wurde, wird der Nagel durch die blosse Hebelwirkung des Ausziehers weggenommen.

Die Ausfuehrung sieht den zugespitzten Stift 1 mit Kopf 2 und der darunterliegenden Halteunterlage 3 vor.

- 1 -

0201654

Patentansprueche.

1. Holzzimmereinagel dadurch gekennzeichnet, dass ein Einstellsitz des Herausziehers auf einer Eindringhalte grundlage verwendet wird. Obiger Herauszieher kann in die Wirkungszentrierlage gebracht werden, indem er auf den mittleren Teil des Nagelstiftes zwischen die Haltegrundlage und den Nagelkopf gebracht wird.

2. Holzzimmereinagel gemaess Anspruch 1 dadurch gekenn zeichnet, dass die Haltegrundlage wening herausragt und einen kleineren Durchmesser als der Nagelkopfdurchmesser besitzt, und daher der Nagel völlkommen hineingedrungen werden kann. Diese weitere Ausfuehrung gestattet, bei besonderen Verwendungsumstaenden das Vorhandensein von herausragenden Metallteilen.

0201654

FIG.1

FIG.2

FIG.3

FIG. 4

FIG.5

## EINSCHLÄGIGE DOKUMENTE

EP 85830116.1

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE - A1 - 2 907 644 (CUGNY, CHARLY)<br>* Patentansprüche 1,2; Fig. 1, 3; Seite 3, Zeilen 1-14 *<br>-- | 1 | F 16 B 15/02 |
| X | WO - A1 81/02 916 (MORISHIMA, MEGUMI)<br>* Zusammenfassung *<br>-- | 1 | |
| X | DE - A1 - 2 361 458 (WAMSLER, MAXIMILIAN JOSEF)<br>* Fig. 2; Patentanspruch 1; Seite 1; Seite 2, Zeilen 1-5 *<br>-- | 1 | |
| A | DE - A1 - 2 713 983 (FA. FRIEDR. TRURNIT)<br>* Fig. 1; Patentanspruch 1; Seiten 2,3 *<br>---- | 1 | |

RECHERCHIERTE SACHGEBIETE (Int. Cl.4)

F 16 B

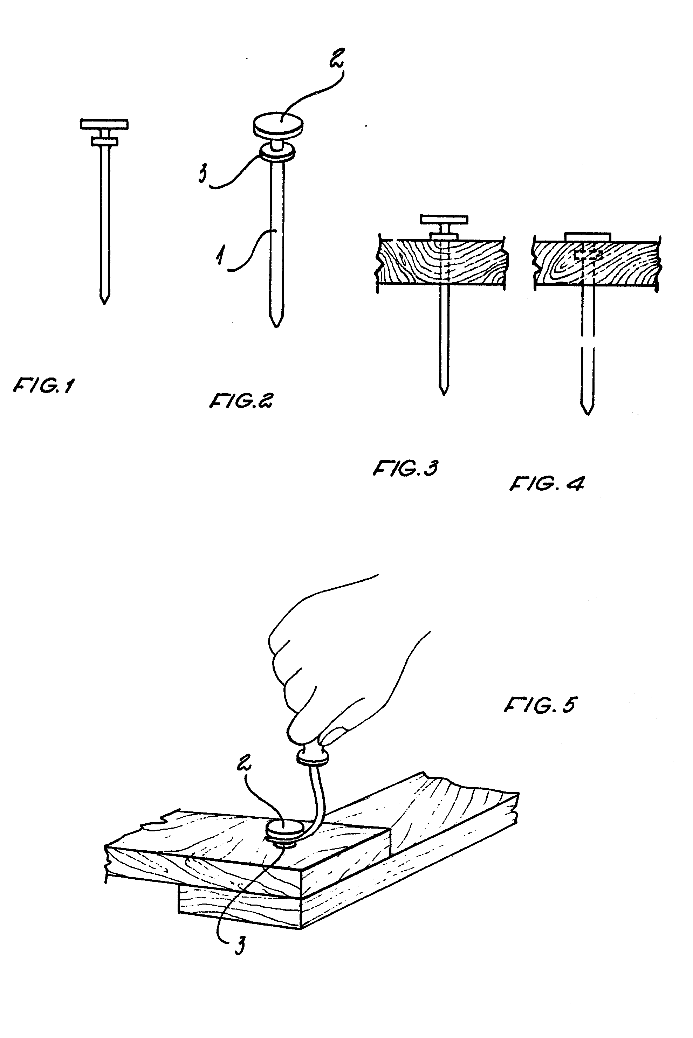

Der vorliegende Recherchenbericht wurde für alle Patentansprüche erstellt.

| Recherchenort | Abschlußdatum der Recherche | Prüfer |
|---|---|---|
| WIEN | 12-06-1986 | HEIN |